# EUROPÄISCHE PATENTSCHRIFT

(11) **EP 2 608 022 B1**
(45) Veröffentlichungstag und Bekanntmachung des Hinweises auf die Patenterteilung: **02.09.2020**
(21) Anmeldenummer: 12005487.9
(22) Anmeldetag: 27.07.2012
(51) Int. Cl.: G06F 9/4401, G06F 9/445

(54) **Mobiles Endgerät zum Betrieb in einem Mobilfunknetz mit wenigstens drei Speicherbereichen und über eine Schnittstelle mit dem mobilen Endgerät verbindbare Recheneinrichtung**
Mobile terminal for operation in a mobile wireless network with at least three storage areas and computing device which can be connected to the mobile terminal through an interface
Terminal mobile destiné à l'utilisation dans un réseau radio mobile avec au moins trois zones de stockage et dispositif de calcul reliable au terminal mobile via une interface

(30) Priorität: 23.12.2011 DE 102011122160
(43) Veröffentlichungstag der Anmeldung: 26.06.2013
(73) Patentinhaber: Vodafone Holding GmbH, 40213 Düsseldorf (DE)
(72) Erfinder: Ackermann, Thomas, 50674 Köln (DE); Lien, Tam, 40599 Düsseldorf (DE); Holländer, Daniel, 44801 Bochum (DE)
(74) Vertreter: Weisbrodt, Bernd

(56) Entgegenhaltungen:
- WO-A2-2006/116026

## Beschreibung

Die vorliegende Erfindung betrifft ein mobiles Endgerät zum Betrieb in einem Mobilfunknetz, insbesondere einem Mobilfunknetz gemäß einem GSM-, UMTS- und/oder LTE-Funknetzstandard, mit einer Eingabeeinrichtung zur Erfassung von Informationen, mit einer Ausgabeeinrichtung zur Wiedergabe von Informationen, mit einer Schnittstelle zum Verbinden des mobilen Endgerätes mit einer Recheneinrichtung und mit wenigstens drei Speicherbereichen gemäß Oberbegriff des Anspruchs 1.

Ferner betrifft die vorliegende Erfindung eine Recheneinrichtung mit einem BIOS und einer Schnittstelle zum Verbinden mit einem mobilen Endgerät gemäß Oberbegriff des Anspruchs 14.

Eingangs genannte mobile Endgeräte sind insbesondere als Mobilfunktelefone im Stand der Technik bekannt. Insbesondere als sogenannte Smartphones ausgebildete Mobilfunktelefone weisen dabei eine Hard- und Software auf, die dem Nutzer solcher Smartphones von Computern bekannte Funktionalitäten zur Verfügung stellen, auch dann, wenn der Nutzer unterwegs ist. Einem Nutzer eines entsprechend ausgebildeten Mobilfunktelefons ist es daher möglich, auch unterwegs E-Mails zu senden und zu empfangen und auf persönliche Daten oder auf Internetinhalte zuzugreifen. Aus diesem Grund werden derartige mobile Endgeräte häufig auch beruflich genutzt, insbesondere da der Zugriff auf persönliche Daten, wie Dokumente, und die bereitgestellten E-Mail-Funktionalitäten zumindest teilweise ein mobiles Arbeiten ermöglichen.

Nachteiligerweise sind bei solchen mobilen Endgeräten viele Funktionalitäten im Vergleich zu Recheneinrichtungen, wie beispielsweise PCs (PC: Personal Computer) oder Notebooks, nur eingeschränkt nutzbar, was in erster Linie auf die der Mobilität geschuldeten Beschränkungen hinsichtlich der Ein- und Ausgabemittel der mobilen Endgeräte zurückzuführen ist. So werden für die mobilen Endgeräte in der Regel Programme mit begrenztem Funktionsumfang angeboten, mit denen sich lediglich grundlegende Funktionen durchführen lassen. Der Grund dafür ist oft der, dass viele Programme in der von PCs oder Notebooks bekannten Darstellungsform, die häufig umfangreiche Menüstrukturen aufweist, sich nicht in erkennbarer beziehungsweise lesbarer Form auf den Displays der mobilen Endgeräte darstellen lassen würden. Denn die Displays dieser mobilen Endgeräte weisen oftmals eine Bildschirmdiagonale von nicht mehr als 3,5 Zoll (etwa 89 Millimeter) auf. Aufgrund dessen wäre auch ein Navigieren in umfangreichen Menüstrukturen nicht in geeigneter Weise möglich, da die Menüstrukturen, um eine Lesbarkeit zu ermöglichen, nur ausschnittsweise dargestellt werden könnte, wodurch allerdings die Übersichtlichkeit stark leiden würde beziehungsweise nicht gegeben wäre.

Ein weiterer Nachteil bei der Nutzung von in einem Mobilfunknetz betreibbaren mobilen Endgeräten besteht darin, dass oftmals nur eine Bedienung mit einem oder zwei Fingern auf verhältnismäßig kleiner Fläche vorgesehen ist. Demgegenüber bieten Recheneinrichtungen, wie PCs oder Notebooks, aufgrund der im Vergleich zu den Smartphones größer dimensionierten Ein- und Ausgabemittel üblicherweise eine komfortablere und ergonomischere Bedienung und erleichtern insbesondere die Eingabe von Informationen, wie Texten, durch Bereitstellung von Tastaturen, die die Anwendung des Zehnfingersystems ermöglichen.

Aus diesen Gründen werden eingangs genannte mobile Endgeräte, wie Smartphones, im beruflichen wie auch im privaten Gebrauch üblicherweise lediglich ergänzend zu Recheneinrichtungen, wie PCs oder Notebooks, genutzt, insbesondere für eine mobile Erreichbarkeit und einen mobilen Zugriff auf Dokumente. So werden insbesondere für die Bearbeitung von Dokumenten, die Nutzung von Internetinhalten, die Kommunikation via E-Mail und dergleichen, von Nutzern in der Regel Rechnerarbeitsplätze genutzt, wobei ein Nutzer hierzu oftmals an unterschiedlichen Rechnern arbeitet, insbesondere in größeren Unternehmen oder dergleichen Einrichtungen. Eine große Gruppe von Nutzern, die oftmals den Rechnerarbeitsplatz wechseln, bilden Arbeitnehmer, die nicht ständig innerhalb des Unternehmens sondern als Arbeitskraft für andere Unternehmen tätig sind.

Ein großer Nachteil besteht nun darin, dass viele Daten an unterschiedlichen Rechnern erzeugt oder über eine Kommunikationsverbindung empfangen werden, und somit nicht zentral verfügbar sind. So ist eine mittels eines eingangs genannten mobilen Endgerätes verfasste E-Mail beispielsweise nicht am PC am Arbeitsplatz verfügbar und ein am PC erstelltes Dokument ist nicht auf einem Notebook verfügbar, dass zu einem Kundenbesuch mitgeführt wird. Dies führt dazu, dass ein Nutzer nicht immer Zugriff auf sämtliche seiner Daten und Programme hat, je nachdem mit welcher Recheneinrichtung der Nutzer gerade arbeitet beziehungsweise an welcher Recheneinrichtung der Nutzer zuvor gearbeitet hat.

Nachteilig ist darüber hinaus, dass dem Nutzer nicht an jedem Rechnerarbeitsplatz seine gewohnte Nutzungsumgebung zur Verfügung steht. So ist auf manchen Recheneinrichtungen nicht die Software- oder die Softwareversion installiert, die der Nutzer zum Arbeiten benötigt. Als weiterer Nachteil kann hinzu kommen, dass der Nutzer mitunter auch nicht über die Administrationsrechte verfügt, um die entsprechende Software auf dem Rechner zu installieren. Auch kann der Nutzer nicht von jedem Rechner aus in gewohnter Weise auf seine E-Mail-Konten zugreifen, so dass eine Kommunikationshistorie mitunter nicht eingesehen werden kann. Des Weiteren verfügt nicht jeder Rechner über einen Zugang zum Internet, so dass eine Nutzung von internetbasierten Funktionen nicht immer ermöglicht ist.

Die bestehenden Nachteile lassen sich bislang aber nur unzureichend lösen. Eine bislang unbefriedigende Lösung besteht darin, dass ein eingangs genanntes mobiles Endgerät, wie ein Smartphone, und eine Recheneinrichtung für einen Austausch von Daten über eine Schnittstelle miteinander verbunden werden. An das mobile Endgerät übertragene Daten können dann üblicherweise auf einem Festspeicher des mobilen Endgerätes oder einer mit dem mobilen Endgerät genutzten Speicherkarte genutzt werden. Seltener werden an das mobile Endgerät übertragene Daten auf der SIM-Karte des mobilen Endgerätes gespeichert. Ferner besteht die Möglichkeit, unter Nutzung der Schnittstelle und einer Sende-/Empfangseinheit des mobilen Endgerätes eine mit der Recheneinrichtung nutzbare Internetverbindung über das Mobilfunknetz herzustellen (sogenanntes "Tethering"). Dieses Vorgehen bietet aber insbesondere keine Lösung für das Problem, dass auf der dem Nutzer zur Verfügung gestellten Recheneinrichtung eine bestimmte Software nicht vorhanden ist. Auch lassen sich persönliche Daten, wie E-Mails oder in einem Browser genutzte Lesezeichen beziehungsweise Favoriten, nicht ohne Weiteres auf die genutzte Recheneinrichtung übertragen, da eine entsprechende Synchronisationslösung meist nicht zur Verfügung steht und es oftmals nicht gewünscht ist, dass derartige private Daten auf einer von mehreren unterschiedlichen Nutzern genutzten Recheneinrichtung verbleiben.

Aus der EP 1 837 756 A2 ist zudem ein Verbindungsmodul zur Nutzung mit einer Recheneinrichtung bekannt. Das Verbindungsmodul weist in einem nichtflüchtigen Datenspeicher ein Betriebssystem auf, wobei das Betriebssystem die Steuerung der Recheneinrichtung übernimmt. Das Verbindungsmodul ist zudem ausgebildet, eine Internetverbindung über ein Mobilfunknetz herzustellen. Das Verbindungsmodul gemäß der EP 1 837 756 A2 ermöglicht somit eine Bereitstellung eines Internetzugangs für eine Recheneinrichtung, die über keinen eigenen Internetzugang verfügt, ohne an der Konfiguration der Recheneinrichtung Änderungen vornehmen zu müssen. Nachteiligerweise ist insbesondere keine mobile Nutzung des Verbindungsmoduls möglich. Ein Nutzer hat somit nachteiliger Weise insbesondere keine Möglichkeit, unterwegs auf seine Daten zuzugreifen.

Aus der WO 2006/116026 A2 sind eine Vorrichtung und ein Verfahren bekannt, welche die Nutzung von Ressourcen eines mit einem mobilen Endgerät verbundenen externen Gerätes ermöglichen. Mittels einer auf dem externen Gerät ausgeführten Software sind Ressourcen des mit dem mobilen Endgerät verbundenen externen Gerätes nutzbar. Hierzu sind über das mobile Endgerät notwendige Treiber zur gemeinsamen Nutzung von Ressourcen an das externe Gerät ladbar und übertragbar.

Vor diesem Hintergrund liegt der vorliegenden Erfindung die Aufgabe zugrunde, ein eingangs genanntes mobiles Endgerät bereitzustellen, welches unter Vermeidung der oben genannten Nachteile einem Nutzer des mobilen Endgerätes ein Arbeiten an unterschiedlichen Recheneinrichtungen mit einer im Wesentlichen einheitlichen Nutzungsumgebung ermöglicht und insbesondere eine ständige Verfügbarkeit von Nutzerdaten, wie Dokumente, E-Mails und dergleichen ermöglicht, insbesondere auch an einem Rechnerarbeitsplatz.

Zur technischen Lösung der Aufgabe wird mit der vorliegenden Erfindung ein mobiles Endgerät gemäß Anspruch 1 vorgeschlagen.

Unter dem Begriff Software im Sinne der vorliegenden Erfindung ist dabei insbesondere ein ausführbarer Programmcode zu verstehen, dessen Ausführung eine Beeinflussung der Hardware im Sinne einer Steuerung der Hardware zur Folge hat und dem Nutzer somit unterschiedliche Funktionalitäten bereitstellt. Die Software kann dabei aus unterschiedlichen Komponenten bestehen, wobei die unterschiedlichen Komponenten Programmdateien aufweisen, die auf Maschinencode und/oder auf höheren Programmiersprachen basieren können.

Ein mobiles Endgerät im Sinne der vorliegenden Erfindung ist insbesondere ein nach Art eines Smartphones ausgebildetes Mobilfunktelefon, welches insbesondere über Funktionen, wie das Aufrufen von Internetinhalten in einem Browser, ein Senden, Empfangen, Editieren und Verwalten von E-Mails, ein Verwalten, Wiedergeben und Bearbeiten von Fotos und Videos, ein Herunterladen von Musik aus dem Internet sowie ein Speichern, Verwalten und Abspielen von Musik und/oder ein Betrachten und Editieren von Dokumenten, verfügt.

Eine Recheneinrichtung im Sinne der vorliegenden Erfindung ist insbesondere ein Computer, vorzugsweise ein PC oder Notebook.

Die erfindungsgemäße Lösung beseitigt dabei insbesondere die nachfolgend skizzierte Problematik: Ein Arbeitnehmer nutzt morgens vor der Arbeit seinen privaten Rechner, um seine E-Mails abzurufen. Auf dem Weg zur Arbeit nutzt er dann sein Smartphone, um eine Antwort auf eine E-Mail zu verfassen. Im Unternehmen angekommen, nutzt der Arbeitnehmer einen an seinem Arbeitsplatz verfügbaren Rechner, beispielsweise um eine computerunterstützte interaktive Präsentation zu erstellen. Um die Präsentation seinen Kollegen in einem Konferenzraum vorzustellen, wird ein dort verfügbarer Rechner genutzt. Um am Nachmittag bei einem Kunden die Präsentation zu halten, wird ein seitens des Kunden zur Verfügung gestellter Rechner genutzt. Nachteiligerweise kann der Nutzer an seinem Arbeitsplatzrechner nicht auf das in der Bahn mittels seines Smartphones überarbeitete Dokument zugreifen. Zuvor muss er dies von dem Smartphone an den Arbeitsplatzrechner übertragen. Darüber hinaus kann er mit seinem Smartphone eine Antwort auf eine E-Mail, die er von seinem Arbeitsplatzrechner gesendet hat, nicht einsehen. Ferner ist auf einem für eine Präsentation bereitgestellten Laptop ein für die Wiedergabe der vorbereiteten Präsentationsfolien erforderliches Programm nicht installiert.

Die Erfindung nutzt die Erkenntnis, dass in einem Mobilfunknetz betreibbare mobile Endgeräte insbesondere im Berufsleben häufig zum mobilen Arbeiten verwendet werden, insbesondere um unterwegs E-Mails oder Internetinhalte nutzen zu können. Insofern ist ein Nutzer daran gewöhnt, ein mobiles Endgerät mit sich zu führen. Darüber hinaus liegt der Erfindung die Erkenntnis zugrunde, dass Nutzer von Recheneinrichtungen sich in einer gewohnten Nutzungsumgebung wohler fühlen und effektiver arbeiten können. Zu einer gewohnten Nutzungsumgebung zählen dabei erkenntnisgemäß vorteilhafterweise ein einheitliches Erscheinungsbild, ein zumindest vergleichbarer Zugriff auf vorhandene E-Mail-Konten, wobei ein Zugriff auf sämtliche innerhalb einer bestimmten Zeitperiode empfangene und/oder gesendete E-Mails ermöglicht sein sollte, die Verfügbarkeit von seitens des Nutzers benötigten Programmen, wie Textverarbeitungsprogrammen, Tabellenkalkulationsprogrammen und/oder Präsentationsprogrammen, sowie ein Zugriff auf erstellte und/oder gespeicherte Dokumente und ein Zugang zum Internet. Die Erfindung macht sich des Weiteren die Erkenntnis zu Nutze, dass die Bereitstellung einer vergleichbaren Nutzungsumgebung dadurch realisierbar ist, dass das mobile Endgerät über eine Schnittstelle des mobilen Endgerätes mit einer von dem Nutzer zu nutzenden Recheneinrichtung verbunden wird, und die über die Schnittstelle mit dem mobilen Endgerät verbundene Recheneinrichtung sowie gegebenenfalls mit der Recheneinrichtung verbundene Komponenten mit einer seitens des mobilen Endgerätes in einem definierten Speicherbereich bereitgestellten Software genutzt wird.

Gemäß einer vorteilhaften Ausgestaltung des erfindungsgemäßen mobilen Endgerätes ist vorgesehen, dass die zweite Software zumindest teilweise die Steuerung der Recheneinrichtung sowie der mit der Recheneinrichtung verbundenen Komponenten, wie Tastatur, Bildschirm, Drucker und dergleichen Ein- beziehungsweise Ausgabemittel, übernimmt. Darüber hinaus ist vorteilhafterweise vorgesehen, dass die zweite Software unter Nutzung der Mittel des mobilen Endgerätes eine mit der Recheneinrichtung nutzbare Verbindung mit einem Mobilfunknetz bereitstellt, insbesondere zur Nutzung von internetbasierten Funktionen und Inhalten. Ferner wird erfindungsgemäß sowohl bei Nutzung des mobilen Endgerätes unter Verwendung der ersten Software als auch bei Nutzung einer Recheneinrichtung unter Verwendung der zweiten Software zur Nutzung von Daten auf denselben seitens des mobilen Endgerätes bereitgestellten dritten Speicherbereich zugegriffen. Eine aufwendige programmgesteuerte Synchronisation von mit unterschiedlichen Recheneinrichtungen genutzten Daten ist dabei vorteilhafterweise entbehrlich. Zudem müssen vorteilhafterweise E-Mails nicht mehrfach übertragen werden, um gesendete und/oder empfangene E-Mails sowohl unter Verwendung des mobilen Endgerätes als auch unter Verwendung einer Recheneinrichtung verfügbar zu haben, da E-Mails bei einem einmaligen Speichern in dem dritten Speicherbereich auch mit Mitteln einer über die Schnittstelle des mobilen Endgerätes mit dem mobilen Endgerät verbundenen Recheneinrichtung unter Verwendung der zweiten Software aus dem dritten Speicherbereich des mobilen Endgerätes aufgerufen werden können.

Gemäß einer besonders vorteilhaften Ausgestaltung des erfindungsgemäßen mobilen Endgerätes, sind unter Verwendung der zweiten Software technische Mittel des mobilen Endgerätes nutzbar. Technische Mittel des mobilen Endgerätes sind dabei insbesondere eine Steuerung des mobilen Endgerätes (Mikrocontroller), eine Sende-/Empfangseinheit des mobilen Endgerätes, Speichereinrichtungen des mobilen Endgerätes, Ein-/Ausgabeeinrichtungen des mobilen Endgerätes und/oder ein Teilnehmeridentifikationsmodul des mobilen Endgerätes. Vorteilhafterweise ist unter Verwendung der zweiten Software mit den technischen Mitteln des mobilen Endgerätes eine Kommunikationsverbindung mit einem Mobilfunknetz herstellbar. Vorteilhafterweise sind über diese Kommunikationsverbindung mit einer über die Schnittstelle des mobilen Endgerätes verbundenen Recheneinrichtung unter Verwendung der zweiten Software Kommunikationsdienste des Mobilfunknetzes nutzbar, insbesondere Kommunikationsdienste wie SMS, MMS, E-Mail und/oder eine Nutzung von Internetfunktionen und/oder Internetinhalten ermöglichende Datenübertragungsverfahren, wie HSDPA (HSDPA: High Speed Downlink Packet Access) oder HSUPA (HSUPA: High Speed Uplink Packet Access).

Erfindungsgemäß ist die erste und/oder die zweite Software eine Systemsoftware. Gemäß einer vorteilhaften Ausgestaltung der Erfindung ist die erste Software als Firmware ausgebildet. Gemäß einer weiteren vorteilhaften Ausgestaltung der Erfindung weist die erste Software darüber hinaus zumindest Funktionen eines Betriebssystems auf. Gemäß einer besonders vorteilhaften Ausgestaltung der Erfindung ist die erste Software ein Betriebssystem eines Mobilfunktelefons, vorzugsweise ein Android-basiertes Betriebssystem. Prinzipiell sind auch andere Betriebssysteme, wie Mobile Phone, Apple iOS oder Symbian als erste Software denkbar. Da gemäß einem besonders vorteilhaften Aspekt der Erfindung allerdings vorgesehen ist, dass eine mit dem mobilen Endgerät über die Schnittstelle verbundene Recheneinrichtung den zweiten Speicherbereich als bootfähigen Sektor erkennt, aber nicht alle oben genannten Betriebssysteme hierfür ausgebildet sind, ist erfindungsgemäß eine Zusatzsoftware beziehungsweise eine Zusatzfunktion der Software vorgesehen, die eine entsprechende Erkennung erlaubt.

Die zweite Software ist vorteilhafterweise ebenfalls eine Systemsoftware, insbesondere ein Betriebssystem, welches auf dem zweiten Speicherbereich installiert ist. Vorteilhafterweise ist die zweite Software ein selbstkonfigurierendes Betriebssystem. Gemäß einer besonders bevorzugten Ausgestaltung ist die zweite Software ein sogenanntes Direktstartsystem beziehungsweise Live-System. Die zweite Software ist dabei vorteilhafterweise als Betriebssystem seitens der über die Schnittstelle mit dem mobilen Endgerät verbundenen Recheneinrichtung start- und ausführbar. Vorteilhafterweise sind hierfür keine Installationen seitens der Recheneinrichtung und/oder auf seitens der Recheneinrichtung bereitgestellten Speichermedien durchzuführen. Insofern macht die vorliegende Erfindung ein Speichern von Daten auf einer Speichereinrichtung der Recheneinrichtung, wie einer Festplatte, vorteilhafterweise entbehrlich. Zudem werden erfindungsgemäß keine bleibenden Veränderungen an der Konfiguration der über die Schnittstelle des mobilen Endgerätes mit dem mobilen Endgerät verbundenen Recheneinrichtung vorgenommen, da die Steuerung der Recheneinrichtung vorteilhafterweise unter Verwendung der seitens des mobilen Endgerätes bereitgestellten zweiten Software erfolgt. Eine Ausgestaltungsvariante des erfindungsgemäßen Endgerätes sieht vor, dass die zweite Software ein auf dem Linux-basierten Live-System "Knoppix" basiertes Direktstartsystem ist.

Gemäß einer weiteren vorteilhaften Ausführungsvariante des erfindungsgemäßen mobilen Endgerätes ist die zweite Software eine Virtualisierungssoftware, insbesondere zur Simulierung eines Betriebssystems. Erfindungsgemäß sind als Ausführungsvarianten insbesondere Betriebssystemvirtualisierungen mittels OS-Containern oder mittels Virtual Machine Monitor (VMM) vorgesehen. Vorteilhafterweise werden hierbei keine oder nur wenige ändernde Eingriffe in das Betriebssystem der Recheneinrichtung vorgenommen. Ein weiterer Vorteil der Ausgestaltung als Virtualisierungssoftware besteht darin, dass das Betriebssystem der genutzten Recheneinrichtung zumindest teilweise genutzt wird, für den Nutzer aber lediglich die ihm bekannte durch die seitens des mobilen Endgerätes bereitgestellte zweite Software simulierte Nutzungsumgebung in Erscheinung tritt. Vorteilhafterweise wird die Virtualisierungssoftware von dem Betriebssystem der Recheneinrichtung gestartet, so dass die Recheneinrichtung nicht notwendigerweise dazu eingerichtet sein muss, das Booten einer bootfähigen Partition von einer über eine Schnittstelle mit der Recheneinrichtung verbundenen externen Quelle zu unterstützen.

In einer vorteilhafterweise sehr variablen Ausgestaltung des erfindungsgemäßen mobilen Endgerätes ist als zweite Software ein Direktstartsystem und eine Virtualisierungssoftware zur Simulierung eines Betriebssystems vorgesehen. Vorteilhafterweise ist der zweite Speicherbereich dazu in wenigstens zwei Speicherbereiche unterteilt, wobei auf dem ersten Speicherbereich das Direktstartsystem installiert ist und auf dem zweiten Speicherbereich die Virtualisierungssoftware zur Simulierung eines Betriebssystems. Gemäß einer weiteren Ausgestaltungsvariante des erfindungsgemäßen Endgerätes sind das Direktsystem und die Virtualisierungssoftware in Speicherbereichen zweier separater Speichermedien gespeichert beziehungsweise installiert.

Gemäß einer Ausgestaltungsvariante des erfindungsgemäßen mobilen Endgerätes stellt die zweite Software für eine Nutzung mit einer über die Schnittstelle mit dem erfindungsgemäßen mobilen Endgerät verbundenen Recheneinrichtung ein virtuelles DFÜ-Netzwerk bereit. Dabei stellt das erfindungsgemäße mobile Endgerät quasi eine Routing-Funktionalität für eine über die Schnittstelle mit dem mobilen Endgerät verbundene Recheneinrichtung bereit. Vorteilhafterweise stellt die zweite Software dabei eine Routine bereit, die das mobile Endgerät als Gateway im DFÜ-Netzwerk konfiguriert und vorteilhafterweise beim Schließen beziehungsweise Herunterfahren der zweiten Software die Konfiguration wieder rückstandsfrei entfernt. Dafür legt die zweite Software vorteilhafterweise eine entsprechende Historie an.

Vorteilhafterweise sind Daten sowohl unter Verwendung der ersten Software als auch unter Verwendung der zweiten Software in dem dritten Speicherbereich speicherbar. Hierdurch ist vorteilhafterweise eine Nutzung des dritten Speicherbereichs gekennzeichnet. So sind vorteilhafterweise empfangene E-Mails und/oder erstellte Dokumente in dem dritten Speicherbereich speicherbar.

Gemäß einer weiteren vorteilhaften Ausgestaltungsvariante ist wenigstens ein weiterer Speicherbereich vorgesehen, wobei der weitere Speicherbereich ebenfalls sowohl unter Verwendung der ersten Software als auch unter Verwendung der zweiten Software nutzbar ist. Der wenigstens eine weitere Speicherbereich ist vorteilhafterweise nutzbar, um Daten, denen bestimmten Kriterien zugeordnet sind, in unterschiedlichen Speicherbereichen zu speichern. Bevorzugte Kriterien sind dabei "privat" und "beruflich", wobei Daten, denen das Kriterium "privat" zugeordnet ist, in einem Speicherbereich gespeichert werden, und Daten, denen das Kriterium "beruflich" zugeordnet ist, in einem anderen Speicherbereich gespeichert werden.

Vorteilhafterweise sind in dem dritten Speicherbereich und/oder in einem weiteren Speicherbereich gespeicherte Daten sowohl unter Verwendung der ersten als auch unter Verwendung der zweiten Software auslesbar. Hierdurch ist vorteilhafterweise eine weitere erfindungsgemäße Nutzung des dritten Speicherbereichs gekennzeichnet.

Gemäß einem weiteren vorteilhaften Aspekt der Erfindung ist in dem dritten Speicherbereich gespeicherte weitere Software sowohl unter Verwendung der ersten Software als auch unter Verwendung der zweiten Software ausführbar. Erfindungsgemäß kann die weitere Software auch in einem weiteren, beispielsweise einem vierten Speicherbereich gespeichert sein. Eine Zuordnung zu einem Speicherbereich erfolgt dabei vorteilhafterweise ebenfalls nach einem der weiteren Software zugeordneten erfindungsgemäßen Kriterium. Vorteilhafterweise ist die weitere Software eine Anwendungssoftware. Bevorzugt sind Programme zur Textverarbeitung, Programme zur Tabellenkalkulation, ein Programm zur Ausarbeitung von Präsentationen, E-Mail-Programme, Browser, Dateibetrachtungsprogramme, wie sogenannte Document-Reader, und/oder Persönliche Information Manager (PIM), insbesondere zum Verwalten von Terminen, als Anwendungssoftware vorgesehen.

Durch die in dem dritten und/oder dem weiteren Speicherbereich gespeicherte beziehungsweise installierte Software hat ein Nutzer unter Verwendung des erfindungsgemäßen mobilen Endgerätes vorteilhafterweise an einem über die Schnittstelle des mobilen Endgeräts mit dem mobilen Endgerät verbundenen Rechner Zugriff auf die in dem dritten Speicherbereich gespeicherten beziehungsweise installierten Programme. Insofern ist der Nutzer vorteilhafterweise unabhängiger von der ihm zur Verfügung gestellten Recheneinrichtung. Hat ein Nutzer beispielsweise eine rechnergestützte Präsentation vorbereitet, so ist er nicht darauf angewiesen, dass die in dem Präsentationsraum zur Verfügung gestellte Recheneinrichtung über eine Software zur Wiedergabe der Präsentation verfügt. Vielmehr kann der Nutzer durch Verbinden des erfindungsgemäßen Endgerätes mit der Recheneinrichtung auf seine eigenen Programme und Dateien zugreifen.

Gemäß einer vorteilhaften Ausgestaltung des erfindungsgemäßen mobilen Endgerätes ist vorgesehen, dass die wenigstens drei Speicherbereiche Partitionen eines physikalischen Speicherelementes sind. Das Speicherelement ist dabei vorteilhafterweise als ein Speichermedium des mobilen Endgerätes ausgebildet.

Gemäß einer weiteren vorteilhaften Ausgestaltungsvariante des erfindungsgemäßen mobilen Endgerätes ist vorgesehen, dass jeder der wenigstens drei Speicherbereiche jeweils ein Speicherbereich eines physikalischen Speicherbereichs ist. Vorteilhafterweise ist das wenigstens eine physikalische Speicherelement ein Flash-Speicher. Gemäß einer weiteren vorteilhaften Ausgestaltung des erfindungsgemäßen mobilen Endgerätes ist der erste Speicherbereich und/oder der zweite Speicherbereich ein Speicherbereich eines Festwertspeichers. Vorteilhafterweise können der die erste Software und/oder der die zweite Software bereitstellende Speicherbereich nicht überschrieben werden, insbesondere nicht versehentlich.

In einer weiteren vorteilhaften Ausgestaltungsvariante des erfindungsgemäßen mobilen Endgerätes ist zumindest der dritte Speicherbereich ein Speicherbereich einer seitens des mobilen Endgerätes nutzbaren Speicherkarte. Vorzugsweise ist die Speicherkarte als Secure Digital Memory Card (SD) ausgebildet, besonders bevorzugt als microSD. Erfindungsgemäß können aber auch andere Typen von Speicherkarten mit dem erfindungsgemäßen mobilen Endgerät genutzt werden, insbesondere vom Typ CompactFlash (CF), Multimedia Card (MMC) oder xD-Picture Card (xD). Vorteilhafterweise ist ein Zugriff bei einer Ausgestaltung des dritten Speicherbereichs als ein Speicherbereich einer seitens des mobilen Endgerätes nutzbaren Speicherkarte ein Zugriff auf die Daten unter Verwendung eines entsprechenden Endgerätes auch dann möglich, wenn das erfindungsgemäße mobile Endgerät nicht betriebsbereit ist, beispielsweise aufgrund eines entladenen Akkumulators oder aufgrund eines Defekts. Vorteilhafterweise ist die Schnittstelle zum Verbinden des mobilen Endgerätes mit der Recheneinrichtung ein serielles Bussystem, besonders bevorzugt gemäß dem Universal Serial Bus (USB) oder Firewire. Eine USB-Schnittstelle bietet dabei insbesondere den Vorteil, dass das BIOS (BIOS: Basic Input/Output System) der über die USB-Schnittstelle mit dem mobilen Endgerät verbundenen Recheneinrichtung während des Bootvorgangs auf einen über die USB-Schnittstelle verfügbaren Bootsektor zugreifen kann. Erfindungsgemäß ist gemäß einer vorteilhaften Ausgestaltungsvariante vorgesehen, dass das BIOS der Recheneinrichtung den zweiten Speicherbereich des mobilen Endgerätes als gültigen Bootsektor erkennt und das dort hinterlegte Betriebssystem startet.

Zur Lösung der eingangs genannten Aufgabe wird mit der vorliegenden Erfindung des Weiteren eine Recheneinrichtung mit einem BIOS und einer Schnittstelle zum Verbinden mit einem mobilen Endgerät gemäß Anspruch 14 vorgeschlagen.

Vorzugsweise ist die Recheneinrichtung nach Art eines PCs oder nach Art eines Notebooks ausgestaltet. Vorteilhafterweise bilden das erfindungsgemäße mobile Endgerät und die erfindungsgemäße Recheneinrichtung zusammen ein System, welches vorteilhafterweise die Vorteile des erfindungsgemäßen Endgerätes mit den Vorteilen der erfindungsgemäßen Recheneinrichtung miteinander vereint.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer Prinzipdarstellung ein Ausführungsbeispiel für ein erfindungsgemäßes mobiles Endgerät,
- Fig. 2a: in einer schematischen Darstellung ein weiteres Ausführungsbeispiel für ein erfindungsgemäßes mobiles Endgerät,
- Fig. 2b: in einer schematischen Darstellung ein weiteres Ausführungsbeispiel für ein erfindungsgemäßes mobiles Endgerät,
- Fig. 3: in einer schematischen Darstellung ein weiteres Ausführungsbeispiel für ein erfindungsgemäßes mobiles Endgerät,
- Fig. 4: in einer schematischen Darstellung ein Ausführungsbeispiel für eine Recheneinrichtung, welche über eine Schnittstelle eines erfindungsgemäßen mobilen Endgerätes mit einem erfindungsgemäßen mobilen Endgerät verbunden ist, und
- Fig. 5: in einer weiteren schematischen Darstellung ein weiteres Ausführungsbeispiel für eine Recheneinrichtung, welche über eine Schnittstelle eines erfindungsgemäßen mobilen Endgerätes mit einem erfindungsgemäßen mobilen Endgerät verbunden ist.

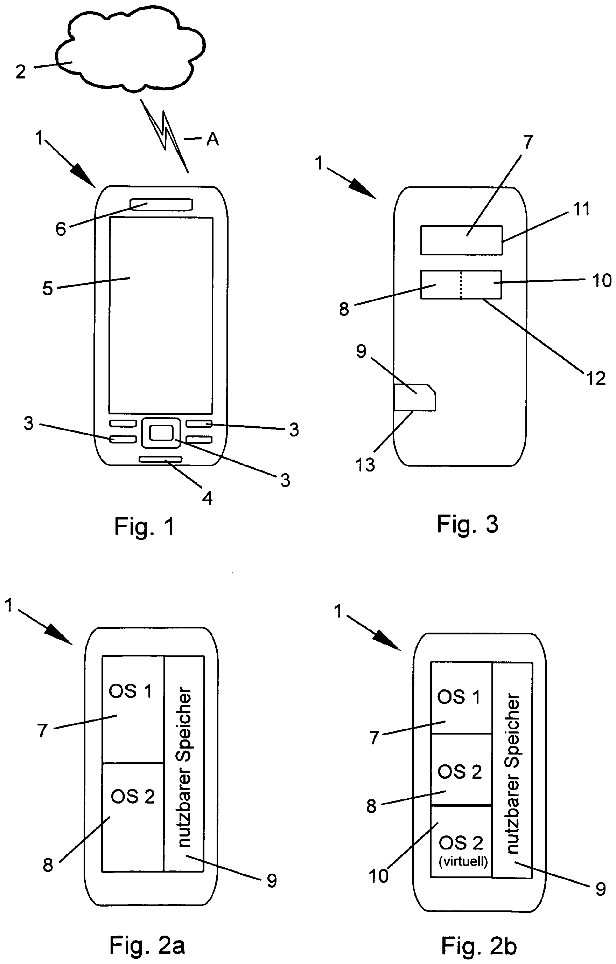

Fig. 1 zeigt in einer Prinzipdarstellung ein erfindungsgemäßes mobiles Endgerät 1, welches zum Betrieb in einem Mobilfunknetz 2 ausgebildet ist. Der Betrieb des mobilen Endgerätes 1 in dem Mobilfunknetz 2 erfolgt vorliegend gemäß einem UMTS-Funknetzstandard (UMTS: Universal Mobile Telecommunication System), wobei die Verbindung zwischen dem mobilen Endgerät 1 und dem symbolisch als Wolke dargestellten Mobilfunknetz 2 mit einem Pfeil A dargestellt ist. Zum Senden und Empfangen von Daten seitens des mobilen Endgerätes 1 über das Mobilfunknetz 2 weist das mobile Endgerät 1 eine in der Figur nicht explizit dargestellte Sende-/Empfangseinrichtung auf. Ferner weist das mobile Endgerät 1 als Eingabeeinrichtung zur Erfassung von Informationen Tasten 3, ein Mikrofon 4, ein berührungssensitives Display 5 sowie eine in der Figur nicht explizit dargestellte Kamera und ebenfalls in der Figur nicht explizit dargestellte Sensoren, wie Beschleunigungssensoren oder Lagesensoren, auf. Als Ausgabeeinrichtung zur Wiedergabe von Informationen weist das mobile Endgerät 1 ein Display 5, einen Lautsprecher 6 und einen in der Figur nicht explizit dargestellten Vibrationen auslösenden Signalgeber sowie eine LED als Licht emittierende Quelle auf. Das mobile Endgerät 1 ist dabei vorteilhafterweise nach Art eines Smartphones ausgebildet.

Das mobile Endgerät 1 weist ferner eine in der Figur nicht dargestellte Schnittstelle zum Verbinden des mobilen Endgerätes 1 mit einer Recheneinrichtung auf. Diese Schnittstelle ist vorliegend als USB-Schnittstelle (USB: Universal Serial Bus) ausgebildet..

Zudem weist das mobile Endgerät 1 einen Datenspeicher (in Fig. 1 nicht explizit dargestellt) mit mehreren Speicherbereichen auf. Ein erster Speicherbereich des mobilen Endgerätes 1 weist dabei eine erste Software auf, welche Grundfunktionen für die Verwendung des mobilen Endgerätes 1 bereitstellt. Ein zweiter Speicherbereich weist eine zweite Software auf, welche Grundfunktionen für die Verwendung einer über die Schnittstelle mit dem mobilen Endgerät 1 verbundenen Recheneinrichtung bereitstellt. Sowohl unter Verwendung der ersten Software als auch unter Verwendung der zweiten Software ist dabei ein dritter Speicherbereich des mobilen Endgerätes nutzbar. Details hierzu sind im Zusammenhang mit den in Fig. 2a, Fig. 2b und Fig. 3 dargestellten Ausführungsbeispielen näher beschrieben.

In Fig. 2a ist schematisch dargestellt, dass ein erfindungsgemäßes mobiles Endgerät 1 drei Speicherbereiche 7, 8, 9 aufweist. Ein erster Speicherbereich 7 weist dabei eine erste Software OS 1 auf, welche als Betriebssystem ausgebildet ist und grundlegende Funktionen für den Betrieb des mobilen Endgerätes 1 bereitstellt. Das Betriebssystem ist vorliegend ein Android-basiertes Betriebssystem. In einem zweiten Speicherbereich 8 weist das mobile Endgerät 1 eine zweite Software OS 2 auf, welche grundlegende Funktionen für den Betrieb einer über die Schnittstelle mit dem mobilen Endgerät 1 verbundenen Recheneinrichtung bereitstellt und welche vorliegend als ein sogenanntes Direktstartsystem ausgebildet ist. Die Software OS 2 ist somit als Betriebssystem automatisch startbar, wenn das mobile Endgerät 1 über die Schnittstelle mit einer Recheneinrichtung verbunden und die Recheneinrichtung gestartet wird.

Das mobile Endgerät 1 weist ferner einen dritten Speicherbereich 9 auf, welcher sowohl unter Verwendung der ersten Software OS 1 als auch unter Verwendung der zweiten Software OS 2 nutzbar ist. So wird beispielsweise ein mit der in der Figur nicht explizit dargestellten Kamera des mobilen Endgerätes 1 aufgenommenes Foto unter Verwendung der ersten Software OS 1 in dem dritten Speicherbereich 9 gespeichert. Dieses in dem dritten Speicherbereich 7 gespeicherte Foto kann mittels einer mit dem mobilen Endgerät über die Schnittstelle verbundenen Recheneinrichtung unter Verwendung der zweiten Software OS 2 aufgerufen und bearbeitet werden. Das bearbeitete Foto kann wiederum in den dritten Speicherbereich 9 gespeichert werden. Auch dann, wenn die Recheneinrichtung nicht mehr mit dem mobilen Endgerät 1 verbunden ist, kann mittels des mobilen Endgerätes unter Verwendung der ersten Software OS 1 auf das bearbeitete, in dem Speicherbereich 9 gespeicherte Foto zugegriffen werden.

Fig. 2b zeigt eine Ausführungsvariante des erfindungsgemäßen mobilen Endgerätes 1. Dabei sind schematisch vier Speicherbereiche 7, 8, 9, 10 des mobilen Endgerätes 1 dargestellt. In dem gegenüber dem Ausführungsbeispiel aus Fig. 2a zusätzlichen Speicherbereich 10 des mobilen Endgerätes 1 ist eine weitere zweite Software OS 2 (virtuell) bereitgestellt ist. Diese weitere zweite Software OS 2 (virtuell) ist insbesondere dann für eine Nutzung vorgesehen, wenn eine über die Schnittstelle des mobilen Endgerätes 1 angeschlossene Recheneinrichtung das Booten eines Direktstartsystems nicht unterstützt. Vorteilhafterweise ist die weitere zweite Software OS 2 (virtuell) von einem Betriebssystem einer über die Schnittstelle des mobilen Endgerätes mit dem mobilen Endgerät verbundenen Recheneinrichtung startbar. Dabei kann vorteilhafterweise auch unter Verwendung der weiteren zweiten Software OS 2 (virtuell) auf den dritten Speicherbereich 9, insbesondere zum Aufrufen und Speichern von Daten zugegriffen werden. In dem sowohl von der ersten Software OS 1 als auch von der zweiten Software OS 2 beziehungsweise OS 2 (virtuell) nutzbaren dritten Speicherbereich 9 ist Anwendungssoftware gespeichert beziehungsweise installiert, die zumindest unter Verwendung der zweiten Software OS 2 beziehungsweise OS 2 (virtuell) für eine Nutzung aufgerufen werden kann. Vorliegend sind als Anwendungssoftware in dem dritten Speicherbereich 9 ein Textverarbeitungsprogramm, ein Tabellenkalkulationsprogramm, ein Präsentationserstellungsprogramm sowie ein E-Mail-Programm installiert. In einer vorteilhaften Ausgestaltungsvariante des mobilen Endgerätes 1 ist die in dem dritten Speicherbereich gespeicherte beziehungsweise installierte Anwendungssoftware zumindest teilweise auch unter Verwendung der ersten Software OS 1 ausführbar. Die Anwendungssoftware weist dabei gemäß einer weiteren vorteilhaften und in der Figur nicht dargestellten Ausführungsvariante des mobilen Endgerätes bei einer Ausführung unter Verwendung der ersten Software OS 1 eine vereinfachte graphische Gestaltung auf und/oder stellen einen geringeren Funktionsumfang zur Verfügung, wodurch vorteilhafterweise eine Nutzung der Anwendungssoftware mittels der Ein-/Ausgabeeinrichtungen des mobilen Endgerätes vereinfacht ist.

In Fig. 3 ist ein weiteres Ausführungsbeispiel für ein erfindungsgemäßes mobiles Endgerät 1 schematisch dargestellt. Dabei ist ein eine erste Software OS 1 aufweisender erster Speicherbereich 7 des mobilen Endgerätes 1 der Speicherbereich eines Flash-Speichers 11 (EEPROM). Des Weiteren weist das mobile Endgerät 1 einen weiteren Flashspeicher 12 auf, wobei der Flashspeicher 12 in zwei Partitionen unterteilt ist, die die Speicherbereiche 8 und 10 aufweisen. Auf der ersten Partition mit dem Speicherbereich 8 des Flash-Speichers 12 ein Direktstartsystem installiert. Die zweite Partition mit dem Speicherbereich 10 des Flash-Speichers 12 weist eine Visualisierungssoftware zur Simulierung eines Betriebssystems auf. Ferner weist das mobile Endgerät 1 eine SD-Karte 13 auf, welche einen dritten Speicherbereich 9 bereitstellt, der sowohl unter Verwendung der ersten Software OS 1 mittels des mobilen Endgerätes 1 als auch unter Verwendung der zweiten Software OS 2 beziehungsweise OS 2 (virtuell) mittels einer über die Schnittstelle des mobilen Endgerätes 1 verbundenen Recheneinrichtung nutzbar ist. Vorteilhafterweise kann die SD-Karte 13 aus dem mobilen Endgerät 1, insbesondere zur weiteren Nutzung der SD-Karte, entnommen werden. Hierzu weist das mobile Endgerät 1 einen in der Figur nicht explizit dargestellten SD-Karten-Slot auf.

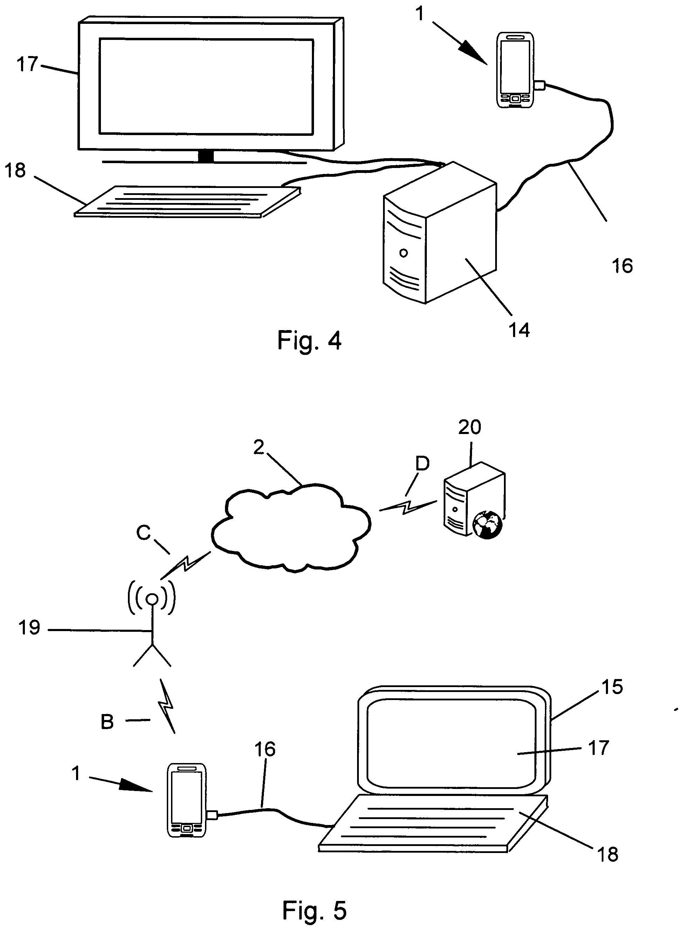

Fig. 4 zeigt in einer schematischen Darstellung ein Ausführungsbeispiel für eine Recheneinrichtung 14, welche über eine Schnittstelle eines erfindungsgemäßen mobilen Endgerätes 1 mit einem erfindungsgemäßen mobilen Endgerät 1 verbunden ist. Die Recheneinrichtung 14 ist in dem Ausführungsbeispiel ein Personal Computer (PC). Als weitere Komponenten der Recheneinrichtung 14 sind in Fig. 4 ein an der Recheneinrichtung angeschlossener Bildschirm 17 als Ausgabeeinrichtung sowie eine als Eingabeeinrichtung nutzbare Tastatur 18 dargestellt. Das mobile Endgerät 1 ist vorliegend über ein USB-Kabel 16 mit der Recheneinrichtung 14 verbunden. Unter Verwendung der zweiten Software, welche in einem zweiten Speicherbereich des mobilen Endgerätes 1 bereitgestellt ist, ist die Recheneinrichtung 14 mit den Komponenten 17, 18 nutzbar, insbesondere für ein Arbeiten mit dem PC. Die zweite Software des mobilen Endgerätes 1 übernimmt dabei die Steuerung des PCs beziehungsweise dessen einzelner Komponenten. In einem dritten Speicherbereich des mobilen Endgerätes 1 installierte und/oder gespeicherte Anwendungsprogramme (in der Figur nicht dargestellt) sind dabei für eine Nutzung aufrufbar. Vorteilhafterweise ist so der Zugriff auf ein in dem dritten Speicherbereich installiertes E-Mail-Programm möglich. Unter Nutzung des E-Mail-Programms sind E-Mails, welche ebenfalls in einem dritten Speicherbereich des mobilen Endgerätes 1 gespeichert sind, aufgerufen und bei Bedarf editiert werden.

Zur Nutzung einer über eine Schnittstelle mit dem erfindungsgemäßen mobilen Endgerät 1 verbundenen Recheneinrichtung 14 unter Verwendung der seitens des mobilen Endgerätes 1 bereitgestellten zweiten Software sind erfindungsgemäß vorteilhafterweise folgende Verfahrensschritte vorgesehen, wobei zumindest einige der angeführten Schritte optional und für eine erfindungsgemäße Verwendung des erfindungsgemäßen mobilen Endgerätes 1 nicht zwingend erforderlich sind:
- Verbinden des mobilen Endgerätes 1 über die Schnittstelle mit der zu nutzenden Recheneinrichtung 14,
- Starten der Recheneinrichtung 14,
- Suchen nach einem bootfähigem Bootsektor seitens des BIOS der Recheneinrichtung 14,
- Erkennen des zweiten Speicherbereichs des mobilen Endgerätes 1 als bootfähigen Bootsektor seitens des BIOS der Recheneinrichtung 14,
- Starten des auf dem zweiten Speicherbereich des mobilen Endgerätes 1 installierten Direktstartsystems,
- Erkennen der Hardwarekomponenten der Recheneinrichtung 14 seitens des Direktstartsystems sowie gegebenenfalls Erkennen eines Bedarfs an zu installierenden Treibern,
- Aufbau einer Internetverbindung unter Nutzung der Komponenten des mobilen Endgerätes 1,
- Herunterladen von benötigten Treibern über die Internetverbindung,
- Installation der heruntergeladenen Treiber auf seitens des mobilen Endgerätes 1 bereitgestellten Speicherbereichen,
- Aufruf von Programmen aus dem dritten Speicherbereich des mobilen Endgerätes 1 unter Verwendung des Direktstartsystems,
- Aufruf von Daten aus dem dritten Speicherbereich des mobilen Endgerätes 1,
- Bearbeiten der aufgerufenen Daten seitens der aufgerufenen Programms mit Mitteln der Recheneinrichtung 14 unter Verwendung des Direktstartsystems,
- Speichern der bearbeiteten Daten auf dem dritten Speicherbereich des mobilen Endgerätes 1,
- Schließen der unter Verwendung des Direktstartsystems aufgerufenen Programme,
- Herunterfahren des Direktstartsystems und/oder
- Trennen der Verbindung zwischen dem mobilen Endgerät 1 und der Recheneinrichtung 14.

In Fig. 5 ist in einer weiteren schematischen Darstellung ein weiteres Ausführungsbeispiel für eine Recheneinrichtung 15 dargestellt, welche über eine in der Figur nicht explizit dargestellten Schnittstelle eines erfindungsgemäßen mobilen Endgerätes 1 mit einem erfindungsgemäßen mobilen Endgerät 1 verbunden ist. Die Recheneinrichtung 15 ist vorliegend ein Laptop, welcher über eine USB-Schnittstelle unter Verwendung eines USB-Kabels 16 mit einem erfindungsgemäßen mobilen Endgerät 1 verbunden ist. Vorteilhafterweise ist unter Verwendung der seitens eines zweiten Speicherbereichs des mobilen Endgerätes 1 bereitgestellten zweiten Software mit Mitteln des mobilen Endgerätes 1 eine Kommunikationsverbindung mit einem Mobilfunknetz 2 (in Fig. 5 symbolhaft als Wolke dargestellt) herstellbar. Mit dem Laptop 15 kann auf diese Weise unter Verwendung der zweiten Software des mobilen Endgerätes 1 über die Kommunikationsverbindung auf Internetinhalte zugegriffen werden. Dazu wird eine Kommunikationsverbindung zwischen dem mobilen Endgerät 1 und einer Base Transceiver Station (BTS) 19 hergestellt (in Fig. 5 symbolisch durch den Pfeil B dargestellt). Über die Base Transceiver Station 19 erfolgt die Verbindung zum Mobilfunknetz 2 (in Fig. 5 symbolisch durch den Pfeil C dargestellt). Über das Mobilfunknetz 2 ist dann ein Zugriff auf das Internet möglich (in Fig. 5 symbolisch durch den Pfeil D dargestellt), wobei ein entsprechender Inhalte bereitstellender Server 20 vorliegend symbolisch und repräsentativ für eine Vielzahl von Servern dargestellt ist.

Ist ein erfindungsgemäßes mobiles Endgerät 1, wie in Fig. 4 und Fig. 5 dargestellt, über eine Schnittstelle mit einer Recheneinrichtung 14, 15 verbunden, sind vorteilhafterweise die Ein- und Ausgabeeinrichtungen, beispielsweise ein Bildschirm 17 und/oder eine Tastatur 18, der Recheneinrichtung für ein Bearbeiten von Dokumenten, beispielsweise dem Verfassen von E-Mails, nutzbar. Vorteilhafterweise sind diese, mit der Recheneinrichtung bereitgestellten Ein- und Ausgabeeinrichtungen üblicherweise komfortabler und ergonomischer zu bedienen, als die Ein- und Ausgabeeinrichtungen eines zum Betrieb in einem Mobilfunknetz ausgebildeten mobilen Endgerätes. Da Daten, die beim Arbeiten mit der Recheneinrichtung unter Verwendung der zweiten Software des mobilen Endgerätes erstellt wurden, in einem dritten Speicherbereich des erfindungsgemäßen mobilen Endgerätes gespeichert werden, ist ein Zugriff auf diese Daten sowohl mittels des mobilen Endgerätes unter Verwendung der ersten Software als auch mittels einer über eine Schnittstelle des mobilen Endgerätes mit dem mobilen Endgerät verbundenen Recheneinrichtung möglich.

Die in den Figuren der Zeichnungen dargestellten und im Zusammenhang dieser beschriebenen Ausführungsbeispiele der Erfindung dienen lediglich der Erläuterung der Erfindung und sind für diese nicht beschränkend.

### Bezugszeichenliste

- 1: mobiles Endgerät
- 2: Mobilfunknetz
- 3: Tasten
- 4: Mikrofon
- 5: Display
- 6: Lautsprecher
- 7: erster Speicherbereich
- 8: zweiter Speicherbereich
- 9: dritter Speicherbereich
- 10: weiterer zweiter Speicherbereich
- 11: Flash-Speicher (Flash-EEPROM)
- 12: zweiter Flash-Speicher (Flash-EEPROM)
- 13: Speicherkarte (Secure Digital Memory Card)
- 14: Personal Computer (PC)
- 15: Laptop
- 16: USB-Kabel
- 17: Bildschirm
- 18: Tastatur
- 19: Base Station Transmitter (BST)
- 20: Internet repräsentierenden Server
- A: Verbindung zwischen dem mobilen Endgerät (1) und dem Mobilfunknetz (2)
- B: Verbindung zwischen dem mobilen Endgerät (1) und dem BTS (19)
- C: Verbindung zwischen dem BTS (19) und dem Mobilfunknetz (2)
- D: Verbindung zwischen dem Mobilfunknetz (2) und dem Internet (20)
- OS 1: erste Software (Betriebssystem)
- OS 2: zweite Software (Betriebssystem)
- OS 2: (virtuell) zweite Software (Virtualisierungssoftware zur Simulierung eines Betriebssystems)

## Patentansprüche

1. Mobiles Endgerät (1) zum Betrieb in einem Mobilfunknetz (2), insbesondere einem Mobilfunknetz gemäß einem GSM-, UMTS- und/oder LTE- Funknetzstandard,
mit einer Eingabeeinrichtung (3, 4, 5) zur Erfassung von Informationen, mit einer Ausgabeeinrichtung (5, 6) zur Wiedergabe von Informationen, mit einer Schnittstelle zum Verbinden des mobilen Endgerätes (1) mit einer Recheneinrichtung (14, 15) und
mit wenigstens drei Speicherbereichen (7, 8, 9, 10),
wobei ein erster Speicherbereich (7) eine erste Software (OS 1) aufweist, welche wenigstens grundlegende Funktionen für den Betrieb des mobilen Endgerätes (1) bereitstellt, und
ein zweiter Speicherbereich (8, 10) eine zweite Software (OS 2) aufweist, welche wenigstens grundlegende Funktionen für den Betrieb einer über die Schnittstelle mit dem mobilen Endgerät (1) verbundenen Recheneinrichtung (14, 15) bereitstellt,
**dadurch gekennzeichnet, dass**
sowohl unter Verwendung der ersten Software (OS 1) als auch unter Verwendung der zweiten Software (OS 2) ein dritter Speicherbereich (9) nutzbar ist und
in dem dritten Speicherbereich (9) gespeicherte Anwendungssoftware sowohl unter Verwendung der ersten Software (OS 1) als auch unter Verwendung der zweiten Software (OS 2) ausführbar ist.

2. Mobiles Endgerät (1) nach Anspruch 1, **dadurch gekennzeichnet, dass** unter Verwendung der zweiten Software (OS 2) technische Mittel, insbesondere eine Steuerung, eine Sende-/Empfangseinheit, Speichereinrichtungen, Ein-/Ausgabeeinrichtungen und/oder ein Teilnehmeridentifikationsmodul, des mobilen Endgerätes (1) nutzbar sind.

3. Mobiles Endgerät (1) nach Anspruch 2, **dadurch gekennzeichnet, dass** unter Verwendung der zweiten Software (OS 2) mit den technischen Mitteln, insbesondere mit der Sende-/Empfangseinheit des mobilen Endgerätes (1), eine Kommunikationsverbindung (A) mit einem Mobilfunknetz (2) herstellbar ist.

4. Mobiles Endgerät (1) nach Anspruch 3, **dadurch gekennzeichnet, dass** über die Kommunikationsverbindung (A) mit einer über die Schnittstelle des mobilen Endgerätes (1) verbundenen Recheneinrichtung (14, 15) unter Verwendung der zweiten Software (OS 2) Kommunikationsdienste des Mobilfunknetzes (2) nutzbar sind.

5. Mobiles Endgerät (1) nach einem der Ansprüche 1 bis 4, **dadurch gekennzeichnet, dass** die erste Software (OS 1) eine Systemsoftware ist.

6. Mobiles Endgerät (1) nach einem der Ansprüche 1 bis 5, **dadurch gekennzeichnet, dass** die zweite Software (OS 2) eine Systemsoftware ist.

7. Mobiles Endgerät (1) nach Anspruch 6, **dadurch gekennzeichnet, dass** die zweite Software (OS 2) ein Direktstartsystem ist.

8. Mobiles Endgerät (1) nach Anspruch 6, **dadurch gekennzeichnet, dass** die zweite Software (OS 2 für Betriebssystemvirtualisierungen vorgesehen ist.

9. Mobiles Endgerät (1) nach einem der Ansprüche 1 bis 8, **dadurch gekennzeichnet, dass** die zweite Software (OS 2) ein virtuelles DFÜ-Netzwerk bereitstellt.

10. Mobiles Endgerät (1) nach einem der Ansprüche 1 bis 9, **dadurch gekennzeichnet, dass** die wenigstens drei Speicherbereiche (7, 8, 9, 10) Partitionen eines physikalischen Speicherelementes sind.

11. Mobiles Endgerät (1) nach einem der Ansprüche 1 bis 10, **dadurch gekennzeichnet, dass** jeder der wenigstens drei Speicherbereiche (7, 8, 9, 10) jeweils ein Speicherbereich eines physikalischen Speicherelements (11, 12, 13) ist.

12. Mobiles Endgerät (1) nach einem der Ansprüche 1 bis 11, **dadurch gekennzeichnet, dass** zumindest der dritte Speicherbereich (9) ein Speicherbereich einer seitens des mobilen Endgerätes (1) nutzbaren Speicherkarte (13) ist.

13. Mobiles Endgerät (1) nach einem der Ansprüche 1 bis 12, **dadurch gekennzeichnet, dass** die Schnittstelle des mobilen Endgerätes (1) ein serielles Bussystem ist.

14. Recheneinrichtung (14, 15) mit einem BIOS und einer Schnittstelle zum Verbinden mit einem mobilen Endgerät (1),
wobei
die Recheneinrichtung (14, 15) über die Schnittstelle mit einem mobilen Endgerät (1) gemäß einem der Ansprüche 1 bis 13 verbindbar ist,
die Recheneinrichtung (14, 15) während eines Bootvorgangs ein über die Schnittstelle mit der Recheneinrichtung (14, 15) verbundenes mobiles Endgerät (1) nach einem der Ansprüche 1 bis 13 auf Vorhandensein eines bootfähigen Speicherbereichs (8) prüft,
die Recheneinrichtung (14, 15) den zweiten Speicherbereich (8) des mobilen Endgerätes (1) nach einem der Ansprüche 1 bis 13 als bootfähigen Speicherbereich (8) erkennt, und
die Recheneinrichtung (14, 15) ein Booten der seitens des bootfähigen Speicherbereichs (8) des mobilen Endgerätes (1) nach einem der Ansprüche 1 bis 13 bereitgestellten zweiten Software (OS 2) initiiert, **dadurch gekennzeichnet, dass**
sowohl unter Verwendung einer ersten Software (OS 1), welche wenigstens grundlegende Funktionen für den Betrieb des mobilen Endgerätes (1) gemäß einem der Ansprüche 1 bis 13 bereitstellt, als auch unter Verwendung der zweiten Software (OS 2) ein dritter Speicherbereich (9) des mobilen Endgerätes (1) gemäß einem der Ansprüche 1 bis 13 nutzbar ist und
in dem dritten Speicherbereich (9) gespeicherte Anwendungssoftware sowohl unter Verwendung der ersten Software (OS 1) als auch unter Verwendung der zweiten Software (OS 2) ausführbar ist.

## Claims

1. A mobile terminal (1) for being operated in a mobile radio network (2), in particular a mobile radio network according to a GSM, UMTS and/or LTE radio network standard,
comprising an input means (3, 4, 5) for gathering information,
comprising an output means (5, 6) for reproducing information,
comprising an interface for connecting the mobile terminal (1) to a computer device (14, 15) and
comprising at least three storage areas (7, 8, 9, 10),
wherein a first storage area (7) comprises a first software (OS 1) which at least provides basic functions for the operation of the mobile terminal (1), and a second storage area (8, 10) comprises a second software (OS 2) which at least provides basic functions for the operation of a computer device (14, 15) connected via the interface to the mobile terminal (1),
**characterized in that**
a third storage area (9) can be used while using both the first software (OS 1) as well as the second software (OS 2) and
an application software stored in the third storage area (9) can be executed while using both the first software (OS 1) as well as using the second software (OS 2).

2. A mobile terminal (1) according to claim 1, **characterized in that** while using the second software (OS 2) technical means, in particular a control, a transmitter and receiver unit, storage means, input/output means and/or a subscriber identification module, of the mobile terminal (1), can be used.

3. A mobile terminal (1) according to claim 2, **characterized in that** while using the second software (OS 2) a communication connection (A) with a mobile radio network (2) can be established by means of the technical means, in particular by means of the transmitter and receiver unit of the mobile terminal (1).

4. A mobile terminal (1) according to claim 3, **characterized in that** communication services of the mobile radio network (2) can be used via the communication connection (A) with a computer device connected via the interface to the mobile terminal (1) using the second software (OS 2).

5. A mobile terminal (1) according to one of the claims 1 to 4, **characterized in that** the first software (OS 1) is a system software.

6. A mobile terminal (1) according to one of the claims 1 to 5, **characterized in that** the second software (OS 2) is a system software.

7. A mobile terminal (1) according to claim 6, **characterized in that** the second software (OS 2) is a direct starting system.

8. A mobile terminal (1) according to claim 6, **characterized in that** the second software (OS 2) is provided for operating system virtualizations.

9. A mobile terminal (1) according to one of the claims 1 to 8, **characterized in that** the second software (OS 2) provides a virtual dial-up network.

10. A mobile terminal (1) according to one of the claims 1 to 9, **characterized in that** the at least three storage areas (7, 8, 9, 10) are partitions of a physical storage element.

11. A mobile terminal (1) according to one of the claims 1 to 10, **characterized in that** each one of the at least three storage areas (7, 8,), 10) is respectively a storage area of a physical storage element (11, 12, 13).

12. A mobile terminal (1) according to one of the claims 1 to 11, **characterized in that** at least the third storage area (9) is a storage area of a memory card (13) that can be used by the mobile terminal (1).

13. A mobile terminal (1) according to one of the claims 1 to 12, **characterized in that** the interface of the mobile terminal (1) is a serial bus system.

14. A computer device (14, 15) comprising a BIOS and an interface for the connection with a mobile terminal (1),
wherein
the computer device (14, 15) can be connected via the interface to a mobile terminal (1) according to one of the claims 1 to 13,
the computer device (14, 15) checks a mobile terminal (1) according to one of the claims 1 to 13 connected via the interface to the computer device (14, 15) for the existence of a bootable storage area (8) during a boot procedure, the computer device (14, 15) recognizes the second storage area (8) of the mobile terminal (1) according to one of the claims 1 to 13 as bootable storage area (8), and
the computer device (14, 15) initiates a booting of the second software (OS 2) provided by the bootable storage area (8) of the mobile terminal (1) according to one of the claims 1 to 13,
**characterized in that**
a third storage area (9) of the mobile terminal (1) according to one of the claims 1 to 13 can be used while using both a first software (OS 1) which provides at least basic functions for the operation of the mobile terminal (1) according to one of the claims 1 to 13 as well as using the second software (OS 2), and
an application software stored in the third storage area (9) can be executed while using both the first software (OS 1) as well as using the second software (OS 2).

## Revendications

1. Terminal mobile (1) destiné au fonctionnement dans un réseau radio mobile (2), notamment un réseau radio mobile selon un standard de réseau radio GSM, UMTS et/ou LTE,
comprenant un moyen d'entrée (3, 4, 5) pour saisir des informations, comprenant un moyen de sortie (5, 6) pour reproduire des informations, comprenant une interface pour relier le terminal mobile (1) à un dispositif de calcul (14, 15) et
comprenant au moins trois zones de stockage (7, 8, 9, 10),
dans lequel une première zone de stockage (7) comprend un premier logiciel (OS 1), qui fournit au moins des fonctions de base du fonctionnement du terminal mobile (1), et
une deuxième zone de stockage (8, 10) comprend un deuxième logiciel (OS 2), qui fournit au moins des fonctions de base du fonctionnement d'un dispositif de calcul (14, 15) relié via l'interface au terminal mobile (1), **caractérisé en ce que**
une troisième zone de stockage (9) est utilisable en utilisant le premier logiciel (OS 1) ainsi que le deuxième logiciel (OS 2) et
un logiciel d'application stocké dans la troisième zone de stockage (9) peut être exécuté en utilisant le premier logiciel (OS 1) ainsi que en utilisant le deuxième logiciel (OS 2).

2. Terminal mobile (1) selon la revendication 1, **caractérisé en ce que** des moyens techniques, notamment une commande, une unité d'émission et de réception, des moyens de stockage, des moyens d'entrée/de sortie et/ou un module d'identification d'abonné, du terminal mobile (1) sont utilisables en utilisant le deuxième logiciel (OS 2).

3. Terminal mobile (1) selon la revendication 2, **caractérisé en ce qu'**une liaison de communication (A) à un réseau radio mobile (2) peut être établie par moyen des moyens techniques, notamment de l'unité d'émission et de réception du terminal mobile (1) en utilisant le deuxième logiciel (OS 2).

4. Terminal mobile (1) selon la revendication 3, **caractérisé en ce que** des services de communication du réseau radio mobile (2) sont utilisables via la liaison de communication (A) à un dispositif de calcul (14, 15) relié via l'interface du terminal mobile (1) en utilisant le deuxième logiciel (OS 2).

5. Terminal mobile (1) selon l'une des revendications 1 à 4, **caractérisé en ce que** le premier logiciel (OS 1) est un logiciel de système.

6. Terminal mobile (1) selon l'une des revendications 1 à 5, **caractérisé en ce que** le deuxième logiciel (OS 2) est un logiciel de système.

7. Terminal mobile (1) selon la revendication 6, **caractérisé en ce que** le deuxième logiciel (OS 2) est un système à démarrage rapide.

8. Terminal mobile (1) selon la revendication 6, **caractérisé en ce que** le deuxième logiciel (OS 2) est prévu pour des virtualisations de système opérationnel.

9. Terminal mobile (1) selon l'une des revendications 1 à 8, **caractérisé en ce que** le deuxième logiciel (OS 2) fournit un réseau à distance virtuel.

10. Terminal mobile (1) selon l'une des revendications 1 à 9, **caractérisé en ce que** les au moins trois zones de stockage (7, 8, 9, 10) sont des partitions d'un élément de stockage physique.

11. Terminal mobile (1) selon l'une des revendications 1 à 10, **caractérisé en ce que** chacune des au moins trois zones de stockage (7, 8, 9, 10) est respectivement une zone de stockage d'un élément de stockage physique (11, 12, 13).

12. Terminal mobile (1) selon l'une des revendications 1 à 11, **caractérisé en ce que** l'au moins troisième zone de stockage (9) est une zone de stockage d'une carte mémoire (13) utilisable par le terminal mobile (1).

13. Terminal mobile (1) selon l'une des revendications 1 à 12, **caractérisé en ce que** l'interface du terminal mobile (1) est un système de bus série.

14. Dispositif de calcul (14, 15) comprenant un BIOS et une interface pour la liaison avec un terminal mobile (1),
dans lequel
le dispositif de calcul (14, 15) peut être relié via l'interface à un terminal mobile (1) selon l'une des revendications 1 à 13,
le dispositif de calcul (14, 15) examine un terminal mobile (1) selon l'une des revendications 1 à 13 relié via l'interface au dispositif de calcul (14, 15) par rapport à la présence d'une zone de stockage (8) démarrable pendant une procédure de démarrage,
le dispositif de calcul (14, 15) reconnaît la deuxième zone de stockage (8) du terminal mobile (1) selon l'une des revendications 1 à 13 comme zone de stockage démarrable (8), et
le dispositif de calcul (14, 15) initie un démarrage du deuxième logiciel (OS 2) fourni par la zone de stockage démarrable (8) du terminal mobile (1) selon l'une des revendications 1 à 13,
**caractérisé en ce qu'**
une troisième zone de stockage (9) du terminal mobile (1) selon l'une des revendications 1 à 13 est utilisable en utilisant un premier logiciel (OS 1), qui fournit au moins des fonctions de base du fonctionnement du terminal mobile (1) selon l'une des revendications 1 à 13, ainsi que en utilisant le deuxième logiciel (OS 2) et
un logiciel d'application stocké dans la troisième zone de stockage (9) peut être exécuté en utilisant le premier logiciel (OS 1) ainsi que en utilisant le deuxième logiciel (OS 2).
